# EUROPEAN PATENT APPLICATION

(11) **EP 4 819 661 A1**
(43) Date of publication of application: **07.10.2026**
(21) Application number: 25382317.3
(22) Date of filing: 31.03.2025
(51) Int. Cl.: H04W 12/30, H04W 4/50

(54) **METHOD, CONFIGURATION PROGRAM, ADMINISTRATION PROGRAM DATASET, COMPUTER-READABLE DATA CARRIER, AS WELL AS SERVER DEVICE ADAPTED FOR OPENING A COMMUNICATION CHANNEL TO A SECURE ELEMENT OF A USER DEVICE, AND SAME**

(71) Applicant: Giesecke+Devrient Mobile Security Germany GmbH, 81677 München (DE)
(72) Inventor: PATIÑO, David, 08820 El Prat de Llobregat (Barcelona) (ES); GARRIDO, Jose Antonio, 08820 El Prat de Llobregat (Barcelona) (ES); GIFRE, Clara, 08820 El Prat de Llobregat (Barcelona) (ES); RUAU, Federico, 08820 El Prat de Llobregat (Barcelona) (ES)
(74) Representative: LKGLOBAL Partnerschaftsgesellschaft mbB

(57) **Abstract**

A method, as well as a corresponding configuration program (10), an administration program dataset (C), a computer-readable data carrier (11, 12, 13), a user device (5), and a server device (3) are provided, wherein for configuring a user device (5), in particular a mobile device or an IoT device, comprising a secure element (6), such as an eUICC, configurable for identifying a user (U) with at least one associated user profile dataset (P) to allow participation in mobile telecommunication networks (N), the method comprises the steps of providing a secure element (6) of the user device (5), such as an eUICC, with an operating system dataset (O); and providing an administration program dataset (C) configured to be installed on the secure element (6) and to open a communication channel (M) to remotely interact with the operating system dataset (O).

## Description

### Technical Field

The present disclosure relates to the field of configuring user devices, for example, smart cards, transaction cards, personal mobile devices or Internet-of-Things (IoT) devices, or alike, for managing remotely triggered operations involving data objects stored and/or to be stored on secure elements of the user devices configured to identify respective users for allowing their participation in communication networks. In particular, the present disclosure relates to a method of configuring a user device, in particular a mobile device or an IoT device, comprising a secure element, such as an eUICC, configurable for identifying a user with at least one associated user profile dataset to allow participation in mobile telecommunication networks, a configuration program for a communication system involving data objects adapted to be stored on a secure element, such as an eUICC, of a user device configurable to be associated to a user and to identify the respective user to allow participation in mobile telecommunication networks, an administration program dataset for operating a secure element of a user device, such as an eUICC, a computer-readable data carrier, a server device, in particular a security server providing a secure location for handling data objects adapted to be stored on a secure element, such as an eUICC, of a user device configurable to be associated to a user and to identify the respective user to allow participation in mobile telecommunication networks, and a user device, in particular a mobile device or an IoT device, configurable for communication via mobile telecommunication networks by a user.

### Background of the Invention

User devices, such as personal mobile devices or IoT-devices, as well as smart cards (e.g., so-called Java cards), identification cards, transaction cards, etc., are known from the prior art. The user devices are commonly configured to employ user profile datasets, also known as electronic subscriber profiles, adapted to identity a user for allowing secure transactions or communications over mobile telecommunication networks, e.g., cellular networks. Therefore, user devices are typically equipped with an electronic/embedded secure element (SE, eSE), also known as tamper resistant element (TRE), which may take the form of an UICC, eUICC, iUICC, SIM, eSIM, iSIM, or alike, configured to store one or more of the electronic subscriber profiles, in the form of respective user profile datasets, that may allow the user devices to connect to one or more mobile networks.

A subscriber profile (e.g., an eSIM profile) may be generated by a mobile network operator (MNO) on a server device, and may be stored, e.g. downloaded from there, by a user device. The subscriber profile, or respective user profile dataset, may then be installed on a secure element of the user device and used for communication over a corresponding mobile network by the user device in that they allow for securely identifying the user. Certain ways for installing and deleting user profile datasets on servers or secure elements are known from the prior art.

The secure elements are run by operating systems (OS) containing software and/or firmware for operating the secure elements. Those OS need to be up to date in order to provide full and reliable functionality of the secure elements. An OS Update is especially relevant with the deployment of embedded Secure Elements (eSE) in the form of eUICC or alike. As opposite of traditional pluggable SIMs that can be inserted and removed, eSEs are soldered into user devices, making it very difficult (or costly) to replace them during the life cycle of the user devices.

Consequently, there is a need to access data objects on the secure elements, for instance to carry out so-called firmware-upgrades and/or updates that allow to modify the content of the eSE in the event that it has to be kept up to date and/or a technical issue has to be fixed. For example, one possible reason for that firmware has to be kept up to date is if a related standard, such as a GSMA specification, relating to the user device changes or is being newly implemented. In any case, such updates can be carried out with the help of an Open Firmware Loader (OFL), or alike, which is specifically designed software component in charge of firmware upgrades including OS updates in the secure element. The need to be able to update the software for certain SE/TRE has generated many different approaches worldwide. In some solutions, there is a separate entity (ITL - Image Trusted Loader, OFL, Update Agent) which is kept in charge in the SE/TRE while the full OS, or only part of it, is being changed, for instance through respective operations carried out Over-The-Air (OTA) involving connections to server devices.

EP 4 124 978 A1, for example, relates to a method for updating an operating system (OS), administering a file system in a secure element (SE). The method comprises the steps of providing an update agent in the SE; assuming control of the SE by the update agent from the operating system; loading an OS image into the SE, the OS image representing an update of the operating system; providing an updated operating system by installing the OS image; and handing over control of the SE by the update agent to the updated operating system. Within this update process, the update agent provides a provisional file system in the SE and administers the provisional file system as long as the update agent is in control of the SE. The present invention also relates to a respective secure element, a respective update agent, and to a respective computer-program product.

EP 4 113 342 A1 relates to a method, a data structure, and an update agent for implementing a scheme for downloading an operating system image onto a secure element. The update agent receives from an external device an installation package for installing an operating system onto the secure element. The update agent requests control of the secure element and loads the operating system received with the installation package into the secure element, after which control of the secure element is transferred to the operating system.

For so-called Convergence devices it has to be considered that an active user profile dataset, such as an eSIM operational profile, exists next to certain services that may be executed by the secure element together with transversal services such as an eSIM OS update. Furthermore, from GSMA RSP SGP.22 v3.0 specification, the scenario of multiple simultaneously enabled profiles in an eSIM is opened, also referred to Multi-Enabled-Profiles (MEP). This requires a clear separation of connections of the communication interface provided through eSIM Ports. The specification vaguely describes the usage of CAT for RSP-centric services (ISD-R, LPAe, etc.) but nothing for SE-like profiles (non-telco) and transversal services.

Methods for configuring user devices, as described above, may not fully satisfy all requirements regarding profile management, in particular, when in the field, i.e., after commencing operation of respective user devices provided with the secure elements, certain profile operations are supposed to be carried out, such as downloads, deletions, disablement, enablement, etc. It can be presumed that SE-like profiles have neither CAT, nor OTA capabilities, other than the ones provided by a certain Service Provider host application communicating with a counterpart card application. Same holds true for OS update capabilities for receiving an OTA update/patch.

In particular constrained host devices may not have resources for implementations of such host counterparts, actually restricting OTA capabilities to the contents of eSIM operational profiles. A respective server device, such as a profile server, for example an SM-DP+ or SM-SR, may attempt to carry out such operations but is unaware of the profile status. The attempt may be futile if the server device is not in control or at least aware of an operational status of the user profile dataset, in particular, when the user profile dataset is not reachable through remote communication, such as if a user device in the form of an automobile provided with a secure element is only operated temporarily. Repeatedly attempting such futile operations may in turn lead to undesired workloads on the side of the server device and respective communication networks.

### Summary of the Invention

It may be seen as an object to improve the interaction between the user devices and/or their secure elements when performing profile operations controlled by respective server devices. In particular, it may be seen as an object to provide a way to access the secure elements to store or alter data objects regardless of the operational status of any user profile dataset, such that on the one hand, convenient operation, versatility, and availability, as well as on the other hand, sufficient functional capacity, safety, and security of the user devices can be provided. These objects are at least partly achieved by the subject-matter of the independent claims.

According to an aspect, a method of configuring a user device, in particular a mobile device or an IoT device, comprising a secure element, such as an eUICC, configurable for identifying a user with at least one associated user profile dataset to allow participation in mobile telecommunication networks, is provided, the method comprising the steps of providing a secure element of the user device, such as an eUICC, with an operating system dataset; and providing an administration program dataset configured to be installed on the secure element and to open a communication channel to remotely interact with the operating system dataset.

According to an aspect, a configuration program for a communication system involving data objects adapted to be stored on a secure element, such as an eUICC, of a user device configurable to be associated to a user and to identify the respective user to allow participation in mobile telecommunication networks, wherein the configuration program comprises instructions which, when the configuration program is executed by a server device, a user device, and/or a secure element, cause the server device, the user device, and/or the secure element to carry out a corresponding method.

According to an aspect, an administration program dataset for operating a secure element of a user device, such as an eUICC is provided, wherein the application program dataset is configured to cause the user device and/or the secure element to carry out a corresponding method and/or configured with a corresponding configuration program.

According to an aspect, a computer-readable data carrier is provided, having stored thereon a corresponding configuration program and/or a corresponding administration program dataset.

According to an aspect, a server device, in particular a security server providing a secure location for handling data objects adapted to be stored on a secure element, such as an eUICC, of a user device configurable to be associated to a user and to identify the respective user to allow participation in mobile telecommunication networks, is provided, wherein the server device is configured to carry out a corresponding method, comprises a corresponding configuration program, a corresponding server program dataset, a corresponding administration program dataset and/or a corresponding computer-readable data carrier.

According to an aspect, a user device, in particular a mobile device or an IoT device, configurable for communication via mobile telecommunication networks by a user, is provided, wherein the user device comprises a secure element which is configured to carry out a corresponding method, comprises a corresponding configuration program, a corresponding administration program dataset and/or a corresponding computer-readable data carrier.

At least one user profile dataset can be installed on a respective secure element and may include security credentials configured for accessing at least one mobile telecommunication network. Further user profile datasets can be provided for accessing the at least one further mobile telecommunication networks. User profile datasets can comprise respective diversified data configured for accessing the at least one mobile telecommunication network and the at least one further mobile communication network.

The server program dataset may, at least in part, be provided on the server device and can be configured to interact with the server device and/or at least one hardware security module (HSM) thereof. In other words, the server program dataset may at least partly run on the server device, for example, as a part of a server system dataset configured to operate the server device. Additionally, an administration program dataset can be provided for installing and/or managing the server program dataset, such as for installing and/or updating the server program dataset or respective update data subsets, including the database. Both, the administration program dataset and the server program dataset may be integrated as data subsets into a customer specific dataset, such as a software suite allowing for customization of data on the server device as described herein.

The administration program dataset and/or additional application program datasets may at least in part be provided on the secure element and can be configured to interact with the user device and/or at least one network terminal thereof. In other words, the application program dataset may at least partly run on the secure element, for example, as a part of an operating system dataset configured to operate the secure element. Additionally, an installation program dataset can be provided for installing and/or managing the application program dataset, such as for installing and/or updating an operating system dataset or respective update data subsets, including the application program dataset. Both, the installation program dataset and the application program dataset may be integrated as data subsets into a customization dataset, such as a firmware suite allowing for customization of data on the secure element as described herein.

The administration program datasets and/or any application program datasets may be provided as a part of an operating system dataset of the secure element and/or may be configured to interact with the operating system dataset. A complete operating system dataset and/or subsets thereof may comprise the administration program dataset and/or any application program dataset. The operating system dataset, administration program dataset, and/or application program dataset may be configured to read, write, delete, manage and/or administer any kind of data stored on the secure element and/or the user device. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. The expression "dataset" can be understood as any kind of data composition, such as a file, including source code, object code, or binaries, which may have or fulfil a certain technical function.

The administration program dataset may provide an administration agent for accessing the secure element, for example in order to manage at least one data object on the secure element, such at least parts of diversified data to securely alter at least one security credentials and/or a user profile dataset, or alike. The administration program dataset can provide admin agent entities outside of the user profile datasets, such as eSIM operational profiles, and can be allowed to have limited presence in any active profiles, with access to the capabilities required for establishing connection channels to entities outside of the user device, such as server devices, for instance, in order to carry out OTA operations. These Admin Agents may be part of an SE profile, or exist next to the root directory, such as an ISD-R, outside any profile, which may be the case when the administration program dataset serves as an OTA capable OS update agent.

The proposed solution allows for generally improving the interaction between the user devices, their secure elements and/or server devices in managing user profiles. In particular, it can be refrained from attempting to carry out profile operations with potentially disabled and possibly unused profiles, in particular in set-ups involving large numbers of user profiles, such that on the one hand, convenient operation, versatility, and availability, as well as on the other hand, sufficient functional capacity, safety, and security of the involved servers and user devices can be provided in a satisfactory manner. The proposed solution thus has the advantage over the prior art, that it provides way to perform operations on the secure element which involve accesses to data objects, independently of a current status of any user profile dataset present on the secure element.

Missing OTA capabilities on applications and services outside eSIM operational profiles can be provided in order to enable connectivity via respective communication channels in use cases that are otherwise not possible without specific off-card support. These services outside the eSIM profile are able to take advantage certain operation toolsets, such as the Card Application Toolkit (CAT) as defined by ETSI 102 223, to support a communication interface of the user device, for instance a baseband modem, for any purpose, but also including OTA (e.g., an Admin Agent SD outside the eSIM profile that is able to initiate OTA/HTTP sessions). Some examples of such use cases may involve OTA download of eSIM OS patches, OTA ELF upgrades for SE profiles, backend access for SE applets, or alike. Access may be enabled to any OTA operation readily available for non-telecommunication services which in turn reduces the necessity of ad-hoc implementations are needed on devices serving as host devices in the field. This facilitates any adoption of eSE-centered services and allows to implement discrete SE devices, which otherwise would have no or merely limited options to take advantage of eSIM OTA capabilities.

Further developments can be derived from the dependent claims and from the following description. Features described with reference to a user device, secure element, server device and components thereof may be implemented as method steps, or vice versa. Therefore, the description provided in the context of the user device, secure element, server device and their components apply in an analogous manner also to respective methods. In particular, features and functions of the user device, secure element, server device and their components may be implemented as method steps which in turn may be implemented as respective device features or functions.

According to an embodiment, the communication channel is configured to connect the user device and/secure element to a server device, in particular, a server device administered by a trusted entity. The server device can remotely carry out any operation on the secure element which may involve access to a data object on the secure element, downloading any data object to the secure element, such as dataset, and/or uploading any data object from the secure element to the server device. This further helps in managing data objects stored or to be stored on secure elements independently of the current status of any user profile dataset.

According to an embodiment, the communication channel is secured by a security key and/or encryption. Any data objects transferred over the communication channel and/or provided over the communication channel be encrypted. This helps in increasing security of any access to the secure elements by means of the administration program dataset.

According to an embodiment, the communication channel is at least in part being established as an HTTP session and/or TCP/IP session. The respective session can be established between the server device and the host device, a communication port of the secure element, an application program dataset residing on the secure element, a profile port of a user profile dataset provided on the secure element, and/or the administration program dataset. This further helps in providing convenient access to any data objects to be remotely accessed and/or provided by means of the administration program dataset.

According to an embodiment, the communication channel is configured to be at least partly established via a secure element port of the user device and/or the secure element. A designated port of the secure element may be used for the communications. Alternatively, or additionally, the administration program dataset can enable to post proactive commands to a user profile port, such as a CAT-enabled eSIM Port, and to receive subscribed events (i.e. DATA AVAILABLE or CHANNEL STATUS for its own BIP channels). This provides OTA to any other SD or Applet associated with remote Admin Agents provided by the administration program dataset. This further helps in providing reliable secure accesses to data objects provided on and/or to be provided to the secure element.

According to an embodiment, the communication channel is configured to be at least partly established with an application program dataset installed on the secure element. Any functions of the application program dataset residing on the secure element may be remotely carried out by means of the administration program dataset. This can further enhance versatility of remotely carried out operations involving data accesses on the secure element.

According to an embodiment, the administration program dataset is provided through personalizing the operating system dataset and/or the secure element with diversified data. The administration program dataset can be provisioned in factory before issuance and/or in the field after issuance of the secure element. This helps in providing the administration program dataset in future proof and versatile, yet secure and reliable manner.

According to an embodiment, the administration program dataset configured to initiate an attempt to open the communication channel. The administration program dataset can be triggered to initiate opening the communication channel periodically, and/or by means of a message, such as a text message (SMS) or alike, received by the user device and/or secure element. This allows to establish the communication channel as desired or required for remotely performing respective operations.

According to an embodiment, the administration program dataset is configured to operate independently of a state of at least one user profile dataset installed on the secure element. The at least one user dataset can be in an enabled state, a disabled state, a locked state, an unlocked state, or alike. As there may be more than one active operational profiles, usage rules can be set up. A priority order, or default profile with or without possibility of fallback to other profiles. This enables to provide control to the user on which connectivity service is allowed for the respective secure element and to perform transversal services.

According to an embodiment, the administration program dataset is configured to provide access to a data operations toolset for handling data objects stored and/or to be stored on the secure element. The data operations toolset can be provided in the form of an application toolkit, such as the Card-Application-Toolkit (CAT) as defined by ETSI 102 223). This allows to enable access to respective functionalities of data operations toolsets for enhanced OTA operations.

### Brief Description of the Drawings

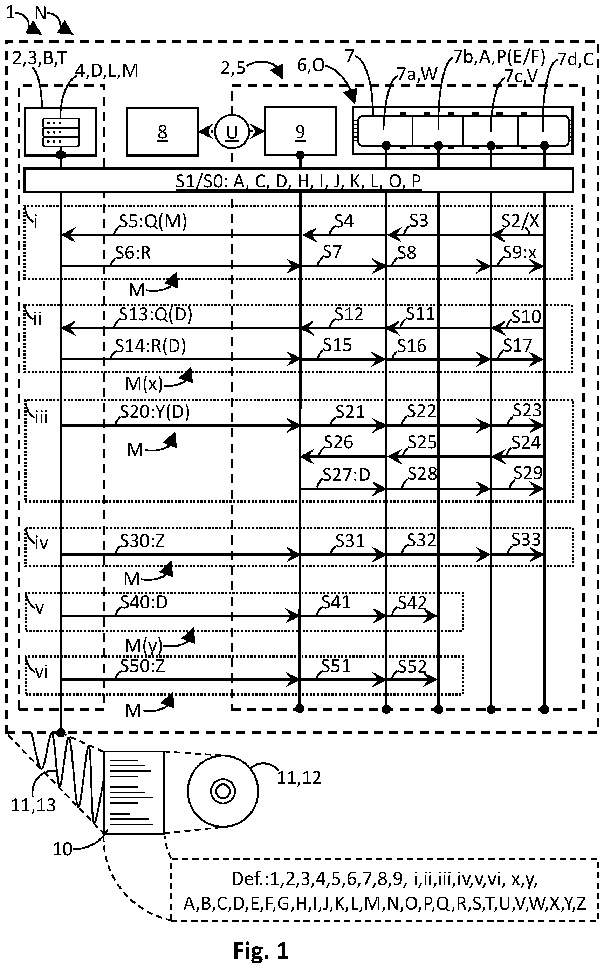

- Fig. 1: is a schematic exemplary illustration of a communication system configured for carrying out a method according to the present invention.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

Fig. 1 shows an schematic illustration of an example of a communication system 1 comprising a computing device 2, for instance, in the form of a server device 3 controlled by a trusted entity T, which can include a hardware security module 4 adapted to store, manage and/or provide application program datasets A, administration program datasets C, operating system datasets O and/or user profile datasets P for configuring a further computing device 2, for example, in the form of a user device 5 which may be embodied an Internet of Things (IoT) device, such as a multimedia device, camera, speaker, household appliance, measurement device, industrial installation, vehicle, vending machine, or alike, to be associated with a machine entity, and/or as a smart card, an identification card, a transaction card, a personal mobile device, such as a smartphone, smartwatch, etc., to be associated with a personal entity. For example, the server device 3 may be provided in the form of a Server for Subscription Manager Data Preparation + (SM-DP+), for Subscription Manager Secure Routing (SM-SR), and/or any kind of intermediary server device 3 that can act between such server devices 3 and the user device 5 and/or a secure element 6 thereof.

The server device 3 and/or the hardware security module 4 may be operated by means of a respective server program dataset B which may involve routine server processes. A database containing an administered set of user profile datasets P can be administered by means of the server device 3 and/or the hardware security module 4. The administered set of user profile datasets P can be any set of user profile datasets P that is being managed by the respective trusted entity T or at least a part of the entirety of managed user profile datasets P, for example, specific user proper datasets P intended for a certain application, customer, and/or mobile communication network N. At least a part of the user profile datasets P may be user profile datasets P which may have to undergo a specific profile operation, such as data downloads (profile updates, operation system updates, application updates, etc.), deletions, disablement, enablement.

In the present example, the user devices 5 may be adapted for secure operation, transactions and/or communication, e.g., via a mobile telecommunication networks N by means of at least one user profile dataset P to be saved in the respective secure element 6 or tamper resistant element (TRE), such as an UICC, eUICC, iUICC, SIM, eSIM, iSIM, SE, eSE, or alike, provided in the form of a computer chip. The user profile data sets P are generated based on respective personal records contained in data files on the server device 3, in particular, the hardware security module 4 thereof. For storing and managing user profile data sets P on the secure elements 6, an operating system dataset O is installed on the secure element 6, for example, in a secure storage location 7, such as an Issuer Security Domain - Root (ISD-R) provided on the secure element 6. The secure storage location 7 may provide different memory regions, such as at least one first memory region 7a, at least one second memory region 7b, at least one third memory region 7c and/or at least one fourth memory region 7d.

The at least one user profile dataset P is associated to a respective user U, can be configured according to respective diversified data L, such as security credentials H, a profile identifier I, authentication certificates J, and/or security keys K to allow access at least one mobile telecommunication network N and/or a data object D. The at least one user profile P, diversified data L, and/or data object D can have a predefined data format as required for participating in the mobile telecommunication networks N and can be stored in respective memory regions 7a to 7d of the secure storage location 7. By accessing the telecommunication networks N, the user may be provided with respective network services and/or access to data objects D. For example, a mobile telecommunication network N may be a public network (PN). Further mobile telecommunication networks N may be a non-public network (NPN), such as a private network of a certain government, non-government institution, e.g., schools, colleges, government agencies, departments, and universities, or alike, and/or private companies, service providers, etc.

A management application 8 may be provided which can be configured to allow the user U to communicate with the user device 5, in particular the secure element 6, for example, directly and/or through a communication interface 9 to the user device 5. The management application 8 can be provided in the form of a remote manager, such as an eSIM IoT remote manager (eIM) which may be securely identified by means of an application identifier and/or authenticated by means of an authentication certificate. The communication interface 9 may be provided in the form of a logical end-to-end interface (ESep) enabling secure communications between the management application 8 and the secure element 6, which can be used to transfer data packages, such as eUICC Packages, for instance to carry out Profile State Management and eIM configuration tasks by means of the eIM, for instance, by means of respective profile operations. For example, the communication interface 9 may be provided as a part of a local management application, such as a IoT Profile Assistant (IPA), which may take the form of an IoT Profile Assistant (IPAd) provided to the user device 5, and/or an IoT Profile Assistant provided (IPAe) arranged in the secure element 6. Alternatively, or additionally, the management application 8 and/or communication interface 9 may be provided as a local profile assistant (LPA) provided to the user device 5 and/or arranged in the secure element 6.

Furthermore, the operating system dataset O may comprise and/or may be configured to interact with an application program dataset A, the administration program dataset C, the at least one user profile P and/or security credentials H, including the profile identifiers I, authentication certificates J and/or security keys K. The security credentials H may comprise any kind of credentials defined by e.g., the GSMA, or alike. The security keys K may comprise any kind of cryptographic code or key element which may be adapted to interact with the user devices 5, the secure elements 6, and/or the server device 3 of the trusted entity T as an issuer of any part of the application program dataset A, the server program dataset B, the administration program dataset C, the security credentials H, the diversified data L, the at least one profile dataset P, the operating system dataset O, the profile identifiers I, and/or the authentication certificates J, the security keys K, and/or any component thereof. The authentication certificates J may be any kind of electronic certificate, for example, that can be issued by the trusted entity T, for authenticating an origin of the user devices 5, the secure elements 6, the secure storage location 7, the application program dataset A, the server program dataset B, the administration program dataset C, the security credentials H, the diversified data, the security keys K, the operating system dataset O, the at least one user profile dataset P, the profile identifiers I, and/or any component thereof.

In any of the embodiments of the communication system 1 as described herein, in particular the computing devices 2, can be configured to execute a computer program in the form of a configuration program 10. A computer-readable data carrier 11 can have stored thereon the configuration program 10 and may take the form of a computer-readable medium 12 and/or data carrier signal 13. When carrying out the configuration program 10, the security system 1 and any components thereof communicate as specified in the configuration program 10. Parameters associated with and/or underlying the communication system 1, as well as any of the components thereof and/or any steps S carried out thereby, can be defined in and/or by the configuration program 10.

For carrying out the steps S, the configuration program 10 may provide and/or define respective command messages, such as status commands, query messages Q and/or response messages R which can be configured to interact with the user devices 5, the secure elements 6, the secure storage location 7, the application program dataset A, the security credentials H, the diversified data L, the operating system dataset O, the at least one profile dataset P, the profile identifiers I, the mobile telecommunication networks N and/or any component thereof. Transmission lines (not shown) may be provided for handling and/or transferring any of the above data components and/or data objects, for example, via mobile telecommunication networks N as parts thereof or elements connected thereto. Therefore, the mobile telecommunication networks N may comprise any kind of wired and/or wireless transmission and/or broadcasting chains or lines, including the Internet (for transmissions "Over-The-Air") as well as other physical and/or non-physical data carriers, which can be configured and secured as desired and required by the communication system 1 and its components for carrying out any of the steps S as described herein.

In a first step S1, the server device 3 may provide any of the data components of the configuration system 1, including the operating system dataset O, possibly along with any required or desired application program dataset A, the administration program dataset C, respective diversified data L and/or at least one user profile P associated with the user U, to the secure element 6 of the user device 5, for example through the communication interface 9 to be stored in the secure storage location 7 for deployment to the user U. The at least one user profile P may be created based upon respective diversified data kept in the database D for the respective user U. In particular, certain security credentials H may have a high or even the highest security level conceivable for the secure element 6. Any of these components may be provided as enable access to data objects, such as electronic load files (ELF), data blobs, or alike.

In the present example, the data provision and step 1 can be associated with a pre-issuance condition of the user device 5 and/or the secure element 6. Any of the steps taking place after the activation process in step 2 can be associated with a post-issuance condition of the user device 5 and/or the secure element 6. Providing an installation program dataset to the user device 5 and/or the secure element 6 can therefore be regarded as a zeroth step S0 which may take place in a factory and/or manufacturing facility before the first step S1 of providing data to the user device 5 and/or the secure element 6. For example, a user profile port W may be provided by the first memory region 7a, the application program dataset A and/or at least one user profile dataset P may be installed in the second memory region 7b, a secure element port V may be provided in the third memory region 7c, and/or the administration program dataset C may be installed in the fourth memory region 7d.

In a second step S2, the administration program dataset C may initiate establishing communication channel M between the user device 5 and/or secure element 6 and the server device 3 and/or hardware security module 4. The user device 5 and/or secure element 6 may be powered up, and/or the at least one user profile dataset may be put in an enabled state E, for example, it there was a power down and/or disablement after receiving the initialization command. The administration program dataset C may operate regardless of an operational state of the user profile dataset P, such as, whether the user profile dataset P is in an enabled state E or in a disabled state F. The initiation may be triggered by a trigger event X which can be implemented as another or separate step, for example, based on a message received and/or periodically timed trigger. The administration program dataset C may initiate establishing the communication channel M via respective query message Q which may involve a handler, such as "ProactiveHandler.send(OPEN CHANNEL)", sent to the secure element port V.

In a third step S3, the secure element port V may provide the query message Q to the user profile port W. In a fourth step S4, the user profile port W may relay the query message Q to the communication interface 9, such as a terminal and/or modem, of the user device 5, e.g., "OPEN CAHNNEL". In a fifth step S5, the communication interface 9 may send the query message Q to the server device 3, for example, via the mobile telecommunication network N.

The sixth step S6, this device 3 may send a corresponding response message R to the user device 5, in particular, the communication interface 9 thereof. In a seventh step S7, the communication interface 9 may relay the response message to the user profile port W, e.g. "TERMINAL RESPONSE (channel x)". In an eighth step S8, the response message R may be sent from the user profile port W to the secure element port V. In a ninth step S8, the response message R may be provided from the secure element port V to the administration program dataset C, for instance, informing the administration program dataset C that the communication channel M, such as a first channel x has been opened, for example, in the form of a HTTP and/or TCP/IP connection.

In a tenth step S10, again a request message Q may be sent from the administration program dataset C to the secure element port V, for instance, requesting to provide a data object D, to be sent over the communication channel M, such as the first channel x, e.g. "Proactive Handler.send (SEND DATA, channel x, data)". In an eleventh step S11, the request message Q may be sent from the secure element V port to the user profile port W. In a twelfth step S12, the request message Q can be relayed by the user profile port W to the communication interface 9.

In a thirteenth step S13, the data object D may be transmitted from the communication interface 9 to the server device 3, for instance, via the mobile telecommunication network N and using the communication channel M, in particular the first channel x, e.g. in the form of "SEND DATA (channel x, data)". In a fourteenth step S14, the server device 3 can respond in acknowledging that data object D has been sent by a respective response message R, such as a "TERMINAL RESPONSE" provided to the communication interface 9. In a fifteenth step S15, the communication interface 9 can relay the response message R to the user profile port W. In a sixteenth step S16, the user profile port W can relay the response message R to the secure element port V. In a seventeenth step S17, the secure element port V can relay the response message R to the administration program dataset C.

In a twentieth step S20, the server device 3 may initiate application of a data operations toolset Y, such as an application toolkit, for a respective transmission to the communication interface 9. In a 20 twenty-first step S21, the communication interface 9 may relay a respective command to the user profile port W, for instance, in the form of "EVENT DOWNLOAD {DATA AVAILABLE, channel x)", in order to initiate download of a data object D. In a twenty-second step S22, the user profile port W may relay the respective command requesting application of the data operations toolset Y to the secure element port V. In a twenty-third step S23, the command can be sent from the secure element port V to the application program dataset C, for instance, in the form of "process Toolkit (DATA AVAILABLE, channel x)".

In the twenty-fourth step S24, the application program dataset C can initiate downloading and/or fetching the data object D by sending a respective request message R to the secure element port V, e.g. in the form of "Proactive Handler.send (RECEIVE DATA, channel x)". In a twenty-fifth step S25, the secure element port V may relay the request to the user profile port W. In a twenty-sixth step S26, the user profile port W may relay the request to the communication interface 9, for example, in the form of "RECEIVE DATA (channel x)".

In a twenty-seventh step S27, the communication interface 9 may provide the respective data object D, for example, in the form of "TERMINAL RESPONSE (data)", to the user profile port W. Providing the data object D may involve downloading the data object from the server device 3 if the data object D has not already been provided in the twentieth step S20 before. In a 20 eighth step S28, the data object D may be provided from the user profile port W to the secure element port V. In a twenty-ninth step S29, the data object D can be provided from the secure element port V to the administration program dataset C.

In a thirtieth step S30, a disconnect event Z can be initiated by the server device 3 being sent to the communication interface 9 in order to disconnect the communication channel C, for instance, the first channel x in the present example. In a thirty-first step S31, the respective disconnect event Z may be provided from the communication interface 9 to the secure element port V, for example, in the form of "EVENT DOWNLOAD (CHANNEL STATUS, channel x)". In a thirty-second step S32, the disconnect event Z can be relayed by the secure element port V to the administration program dataset C, possibly while making use of the data operations toolset Y, for example, in the form of "processToolkit (CHANNEL STATUS, channel x)." In a thirty-third step S33, the data object D may be provided to the administration program dataset C.

In a fortieth step S40, a data object D may be provided and/or notified as being intended to be provided via the communication interface 9 over a communication channel M, such as the second channel y, for example, in the form of a download for the application program dataset A. In a forty-first step S41, a respective data object D and/or a notification regarding the availability of the data object D may be sent from the communication interface 9 to the user profile port W, for example, in the form of "EVENT DOWNLOAD (DATA AVAILABLE, channel y)". In a forty-second step S42, the respective notification regarding a download of a data object D, for example via the second channel y can be provided from the user profile port W to the application program dataset A, for instance, making use of the data operations toolset Y, for example in the form of "processToolkit (DATA AVAILABLE, channel y)".

In a fiftieth step S50, a disconnect event Z can be initiated by the server device 3 being sent to the communication interface 9 in order to disconnect the communication channel C, for instance, the second channel y in the present example. In a fifty-first step S51, the respective disconnect event Z may be provided from the communication interface 9 to the secure element port V, for example, in the form of "EVENT DOWNLOAD (CHANNEL STATUS, channel y)". In a fifty-second step S32, the disconnect event Z can be relayed by the secure element port V to the application program dataset A, possibly while making use of the data operations toolset Y, for example, in the form of "processToolkit (CHANNEL STATUS, channel y)."

According to the present exemplary embodiments, any of the method steps S as described above can be grouped in communication sequences, such as a first communication sequence i to a sixth communication sequence iv. For example, steps S2 to S9 may be carried out as a first sequence i, for instance a sequence intended to open the communication channel M in the form of "OTA session triggered, Admin Agent opens Bearer Independent Protocol (BIP) channel". Steps S10 to S17 carried out as a second sequence ii, for instance for sending data objects D, via the open communication channel M as the first channel x providing an associated channel, for example in the form of "Admin Agent sends data through open BIP channel". The steps S20 to S29 may be carried out as a third sequence iii, for instance regarding a respective data notification, in the form of "DATA AVAILABLE event to eSE associated channel, Admin Agent receives data."

Furthermore, steps S30 to S33 may be carried out as the fourth sequence iv, intended for providing a status information and/or event, such as the disconnect event Z of the associated channel, the present example, the first channel x, and in the form of "CHANNEL STATUS event to eSE associated channel". Steps S40 to S42 may be carried out as a fifth sequence v in order to notify the application program dataset A regarding an available download of a data object D, for instance, via the second channel y which may constitute an unrelated channel, and in the form of "DATA AVAILABLE event to unrelated channel". Steps S50 to S52 may be carried out as a 6 sequence vi to disconnect the unrelated channel, for example, the second channel y, and in the form of "CHANNEL STATUS event to unrelated channel".

According to the present exemplary embodiments, any application program dataset A be provided in the form of an applet that can be associated to the administration program dataset C, for instance providing an Admin Agent SD, allowing it to trigger OTA/HTTP administration sessions through the standard API at org.globalplatform package. By giving Admin Agents limited access to an active operational profile CAT session, it can make the administration sessions go through, with the connectivity provided by said profile. An Admin Agent can post proactive commands (i.e. OPEN CHANNEL) into a CAT-capable eSIM Port. Those proactive commands get can be executed by the baseband modem and/or host device, with the received TERMINAL RESPONSE being forwarded to the originating Admin Agent. Furthermore, the Admin Agent can receive events addressed to it (i.e. a BIP channel open means it's entitled to receive DATA AVAILABLE and CHANNEL STATUS events related to that channel). Certain rules can be set up to control/limit the access, for example in the form of that an Enterprise operational Profile may only be used for OTA by an SE Profile of the same Enterprise and/or regarding a priority order of active eSIM Ports, so that services attempt to use them following the order, with retries on next if needed.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

**Reference Signs**

| | | | |
|---|---|---|---|
| 1 | communication system | A | application program dataset |
| 2 | computing device | B | server program dataset / routine server process |
| 3 | server device | | |
| 4 | hardware security module | C | administration program dataset |
| 5 | user device | D | data object |
| 6 | secure element | E | enabled state |
| 7 | secure storage location | F | disabled state |
| 7a | first memory region | G | status notification / response mes-sage / status response |
| 7b | second memory region | | |
| 7c | first memory region | H | security credentials |
| 7d | second memory region | I | profile identifier |
| 8 | remote management application | J | authentication certificate |
| 9 | communication interface / modem | K | security key |
| 10 | configuration program | L | diversified data |
| 11 | computer-readable data carrier | M | communication channel |
| 12 | computer-readable medium | N | mobile telecommunication network |
| 13 | data carrier signal | O | operating system dataset |
| | | P | user profile dataset |
| i | first sequence / open channel | Q | query message |
| ii | second sequence / send data | R | response message |
| iii | third sequence / data notification | S | step |
| iv | fourth sequence / channel status (associated channel) | T | trusted entity |
| | | U | user |
| v | fifth sequence / data notification | V | secure element port |
| vi | sixth sequence / channel status ( unrelated channel) | W | user profile port |
| | | X | trigger event / connection request |
| | | Y | data operations toolset / application toolkit |
| x | first channel | | |
| y | second channel | Z | disconnect event |
| S0 | set-up/issuance | | |
| S1 | provide data | S30 | send event |
| S2 | initiate channel | S31 | provide event |
| S3 | query initiation | S32 | relay event |
| S4 | relay query | S33 | receive event |
| S5 | send query | | |
| S6 | send response | S40 | send data notification |
| S7 | relay response | S41 | relay data notification |
| S8 | provide response | S42 | receive data notification |
| S9 | receive response | | |
| | | S50 | send event |
| S10 | request data | S51 | relay event |
| S11 | provide request | S52 | receive event |
| S12 | relay request | | |
| S13 | send request | | |
| S14 | send response | | |
| S15 | provide response | | |
| S16 | relay response | | |
| S17 | receive response | | |
| S20 | receive data notification | | |
| S21 | provide notification | | |
| S22 | relay notification | | |
| S23 | receive notification | | |
| S24 | request data | | |
| S25 | provide request | | |
| S26 | relay request | | |
| S27 | return data | | |
| S28 | relay data | | |
| S29 | receive data | | |

## Claims

1. Method of configuring a user device (5), in particular a mobile device or an IoT device, comprising a secure element (6), such as an eUICC, configurable for identifying a user (U) with at least one associated user profile dataset (P) to allow participation in mobile telecommunication networks (N), the method comprising the steps of
providing a secure element (6) of the user device (5), such as an eUICC, with an operating system dataset (O); and
providing an administration program dataset (C) configured to be installed on the secure element (6) and to open a communication channel (M) to remotely interact with the operating system dataset (O).

2. Method according to claim 1, wherein the communication channel (M) is configured to connect the user device (5) and/or secure element (6) to a server device (3), in particular, a server device (3) administered by a trusted entity (T).

3. Method according to claim 1 or 2, wherein the communication channel (M) is secured by a security key and/or encryption.

4. Method according to at least one of claims 1 to 3, wherein the communication channel (M) is at least in part being established as an HTTP session and/or TCP/IP session.

5. Method according to at least one of claims 1 to 4, wherein the communication channel (M) is configured to be at least partly established via a secure element port (V) of the user device (5) and/or the secure element (6).

6. Method according to at least one of claims 1 to 5, wherein the communication channel (M) is configured to be at least partly established with an application program dataset (A) installed on the secure element (6).

7. The method according to at least one of claims 1 to 6, wherein the administration program dataset (C) is provided through personalizing the operating system dataset (O) and/or the secure element (6) with diversified data (L).

8. Method according to at least one of claims 1 to 7, wherein the administration program dataset (C) is configured to initiate an attempt to open the communication channel (M).

9. Method according to at least one of claims 1 to 8, wherein the administration program dataset (C) is configured to operate independently of a state of at least one user profile dataset (P) installed on the secure element (6).

10. Method according to at least one of claims 1 to 9, wherein the administration program dataset (C) is configured to provide access to a data operations toolset (Y) for handling data objects (D) stored and/or to be stored on the secure element (6).

11. Configuration program (10) for a communication system (1) involving data objects (D) adapted to be stored on a secure element (6), such as an eUICC, of a user device (5) configurable to be associated to a user (U) and to identify the respective user (U) to allow participation in mobile telecommunication networks (N), wherein the configuration program (10) comprises instructions which, when the configuration program (10) is executed by a server device (3), a user device (5), and/or a secure element (6), cause the server device (3), the user device (5), and/or the secure element (6) to carry out a method of at least one of claims 1 to 10.

12. Administration program dataset (A) for operating a secure element (6) of a user device (5), such as an eUICC, wherein the administration program dataset (C) is configured to cause the user device (5) and/or the secure element (6) to carry out a method according to at least one of claims 1 to 10 and/or configured with a configuration program (10) according to claim 11.

13. Computer-readable data carrier (11, 12, 13) having stored thereon a configuration program (10) according to claim 11 and/or an administration program dataset (C) according to claim 12.

14. Server device (3), in particular a security server providing a secure location for handling data objects (D) adapted to be stored on a secure element (6), such as an eUICC, of a user device (5) configurable to be associated to a user (U) and to identify the respective user (U) to allow participation in mobile telecommunication networks (N), wherein the server device (4) is configured to carry out a method according to at least one of claims 1 to 10, comprises a configuration program (10) according to claim 11, a corresponding server program dataset (B), an administration program dataset (C) according to claim 12, and/or a computer-readable data carrier (11, 12, 13) according to claim 13.

15. User device (5), in particular a mobile device or an IoT device, configurable for communication via mobile telecommunication networks (N) by a user (U), wherein the user device (5) comprises a secure element (6) which is configured to carry out a method according to at least one of claims 1 to 10, comprises a configuration program (10) according to claim 11, an administration program dataset (C) according to claim 12 and/or a computer-readable data carrier (11, 12, 13) according to claim 13.
